# EUROPÄISCHE PATENTSCHRIFT

(11) **EP 2 326 493 B1**
(45) Veröffentlichungstag und Bekanntmachung des Hinweises auf die Patenterteilung: **11.11.2015**
(21) Anmeldenummer: 09796790.5
(22) Anmeldetag: 11.09.2009
(51) Int. Cl.: B30B 9/12, B30B 9/26

(54) **SCHNECKENFILTERPRESSE**
SCREW FILTER PRESS
FILTRE-PRESSE À VIS SANS FIN

(30) Priorität: 12.09.2008 DE 102008046928
(43) Veröffentlichungstag der Anmeldung: 01.06.2011
(73) Patentinhaber: Klass, Georg Sen., 82299 Türkenfeld (DE)
(72) Erfinder: KLASS, Georg, jun., 82299 Türkenfeld (DE); KLASS, Georg, sen., 82299 Türkenfeld (DE)
(74) Vertreter: Rösler, Uwe
(86) Internationale Anmeldenummer: PCT/IB2009/007350
(87) Internationale Veröffentlichungsnummer: WO 2010/029444

(56) Entgegenhaltungen:
- EP-A1- 0 700 639
- WO-A1-98/15336
- CH-A5- 579 895
- DE-A1- 19 715 173
- DE-A1-102005 002 997
- DE-U1-202007 007 038
- JP-A- 8 001 389
- JP-A- 8 010 988
- JP-A- 2000 254 623
- JP-A- 2001 321 990
- US-B1- 6 634 508

## Beschreibung

### Technisches Gebiet

Die Erfindung betrifft eine senkrecht im Raum angeordnete Schneckenfilterpresse, in der eine Aufschwemmung feinstverteilter fester Stoffe in einer Flüssigkeit (sog. Suspension) mit Hilfe einer einseitig am oberen Wellenende gelagerten und angetriebenen Schneckenwelle, die wenigstens eine, vorzugsweise jedoch zwei oder mehr Wendelgänge oder kurz "Wendeln" aufweist, aus einem unten liegenden Zuführrohr aufgenommen und entlang der Wendeln nach oben gefördert wird, wobei die Feststoffe als Feststoffkuchen entlang der Wendeln nach oben zur Austragsöffnung gelangen, während die Flüssigkeit über ein die Schneckenwelle wenigstens in einem unteren Teilbereich koaxial umgebendes zylindrisches Filterrohr in einen Filtratraum abfließt und von dort abgesaugt wird.

### Stand der Technik

Eine derartige Schneckenfilterpresse mit den Merkmalen des Oberbegriffs des Anspruchs 1 ist aus der DE 10 2005 002 997 A1 bekannt.

Bei dieser bekannten Schneckenfilterpresse, bei der die Schneckenwelle oben mittels eines Motors angetrieben wird und bei der die Schneckenwelle einseitig oben unterhalb des Motors gelagert ist, reicht das zylindrische Filterrohr bis in Höhe der Austragsöffnung und die Schneckenwelle weist auf der ganzen Länge ein Spiel von 0,1 bis 0,3 mm zum zylindrischen Filterrohr auf.

Darüber hinaus reicht die Schneckenwelle mit Filterrohr bis nahezu zum Boden des Zulaufs, bzw. des Zulaufrohrs, das am unteren Ende der Schneckenwelle angeordnet ist. Der Nachteil dieser bekannten Schneckenfilterpresse liegt darin, dass sich zum einen nach relativ kurzer Zeit die Öffnungen des Filterrohrs verschließen, da die Wendelstege bzw. -kanten verschleißen, sich Feststoffe, wie z.B. Sand, am Boden des Zulaufs absetzen und damit den ganzen Zulauf blockieren, und zum anderen, dass sich der Filterkuchen im oberen Teil der Wendeln leicht festsetzt bzw. der Filterkuchen sich verklumpt.

Ein weiterer Nachteil besteht darin, dass durch das Ansaugen der Suspension im unteren Teil des Zulaufrohrs auch größere Teile wie z.B. Steine hochgewirbelt werden und in die Wendeln gelangen, was zur Beschädigung der Wendeln und des Filterrohres führt.

Eine weitere vergleichbare Schneckenpresse ist der AT 411 892 B zu entnehmen, die speziell ausgebildete Wendelkantenaufsätze vorsieht, durch die ein Verkleben bzw. Verstopfen der in dem Filterrohr vorgesehenen Entwässerungsöffnungen verhindert werden soll.

### Darstellung der Erfindung

Aufgabe der vorliegenden Erfindung ist es, die Nachteile der bekannten Schneckenfilterpresse zu beseitigen und eine Schneckenfilterpresse bei geringem technischen Aufwand zu schaffen, in der ein regelbarer, hoher Trockensubstanzgehalt sowie ein hoher Durchsatz von Feststoffen möglich sind. Weiterhin soll in der Suspensionszuführung eine Vorabscheidung von groben Feststoffen möglich sein, um einen störungsfreien Betrieb zu gewährleisten.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der Beschreibung insbesondere unter Bezugnahme auf genannte Ausführungsbeispiele zu entnehmen.

Lösungsgemäß wird eine Schneckenfilterpresse, wie sie der DE 10 2005 002 997 A1 entnommen werden kann, mit einer über wenigstens einen Wendelgang und zwei Schneckenwellenenden verfügenden Schneckenwelle, deren Wellenachse parallel zum Schwerkraftsvektor orientiert ist, die über deren oberes Schneckenwellenende einseitig gelagert und mit einem Drehantrieb verbunden ist, und die wenigstens in ihrem unteren Teilbereich in einem so genannten Filterbereich koaxial von einem mit Öffnungen versehenen, zylindrischen Filterrohr umgeben ist, an dem radial ein Filtratraum angrenzt, an dem Unterdruck anlegbar ist, derart weitergebildet, dass koaxial an das Filterrohr ein sich mit gleichem Innendurchmesser wie das Filterrohr, die Schneckenwelle in Richtung des oberen Schneckenwellenendes radial fluiddicht umgebendes Gleitrohr anschließt, das einem so genannten zylindrischen Gleitbereich entspricht, und dass der wenigstens eine Wendelgang der Schneckenwelle radial zur Schneckenwelle in einer die Schneckenwelle helikal umlaufenden Kante mündet, die im Bereich des Filterrohres mittel- oder unmittelbar inwanding am Filterrohr angrenzt.

Durch die Anordnung eines zylindrischen Gleitrohrs bzw. Gleitbereichs mit gleichem Innendurchmesser, wie ihn der Filterbereich aufweist, ist sicher gestellt, dass der Feststoffkuchen ohne Einengung zur Austragsöffnung gefördert wird. Sowohl die Länge des Gleitbereichs, die vorzugsweise etwa die Hälfte der Länge des Filterbereichs entspricht, sowie ein vorzugsweise zwischen der Außenkanten der Wendeln und dem Innendurchmesser des Gleitbereichs vorhandenes Spiel, bewirken zum einen, dass der Feststoffkuchen eine gewisse Konsistenz erhält, so dass er eine Sperre gegen das Eindringen von Luft von außen bildet, und zum anderen dass der Feststoffkuchen im Gleitbereich in den Wendeln nicht verklumpt.

Durch eine bevorzugte Anordnung von abriebfesten, elastischen Elementen an den Aussenkanten der Wendeln, die unter geringer Vorspannung in das Filterrohr eingefügt werden, erfolgt das Abstreifen der Feststoffe optimal. Hinzukommt, dass die elastischen Elemente die Außenkanten mit gleitendem Übergang zur Wendel selbst bilden, staut sich der Feststoff an keiner Kante und der Abfluß der Feststoffe wird nicht behindert.

Als besonders vorteilhaft hat sich die Ausbildung der eigentlichen Abstreiflippe mit einer Breite von 1-3 mm und einer Höhe von 2-5 mm erwiesen. Da die elastische Lippe aus Polyurethan (sog. zelligem Vulkollan) hergestellt ist, wirkt sich die Elastizität des Werkstoffs bei diesen Abmessungen besonders günstig auf die Abstreifwirkung aus und die Standzeiten der Lippen sind entsprechend lang.

Eine Fertigung der elastischen Elemente als vorgefertigte Einzelteile, die in Nuten an der Außenkante der Wendeln eingeklebt oder die über Klebung mit der Außenkante der Nut verbunden werden, ist einmal ein fertigungstechnisch einfaches Verfahren gewählt, das die Herstellung preisgünstiger elastischer Elemente erlaubt. Zum anderen ist durch das Einkleben in Nuten der für den Feststoffkuchen nötige Abfluss sicher gestellt, weil der Fluss des Feststoffes entlang der Wandeln nicht behindert wird.

Durch ein radiales Spiel von 0,1 bis 0,3 mm im Gleitbereich wird sicher gestellt, dass es nicht zum Verklumpen des Feststoffes bei entsprechend eingestellter Drehzahl und dem an den Filtratraum angelegten Unterdruck auf den Wendeln oder im Gleitbereich kommt.

Durch die Änderung der Drehzahl der Schneckenwelle und/oder die Änderung des Unterdrucks im Filtratraum kann die Konsistenz des Feststoffpropfens im Gleitbereich verändert werden, um einen optimalen Feststoffkuchen zu erreichen.

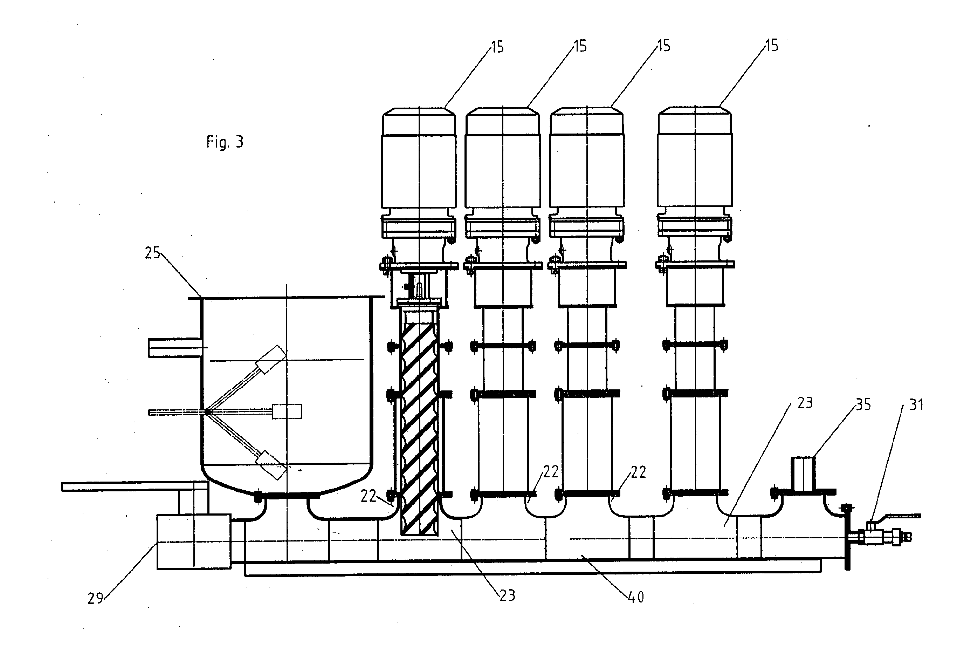

In der Anlaufphase, in der noch keine Feststoffe in den Nuten abgeschieden sind, ist der angelegte Unterdruck zur Filtration bereits wirksam, da durch den Flüssigkeitsstand im Auffangbecken über die Rohrbank der gleiche Flüssigkeitsspiegel im Gleitbereich erreicht wird. An dieser Stelle sei auf die Beschreibung einer Filteranordnung verwiesen, die in Figur 3 näher erläutert wird.

Die beschriebene Schneckenfilterpresse hat den Vorteil, dass sich bei der Inbetriebnahme die zunächst leeren Wendelnuten schnell mit einem Feststoffpfropfen füllen können, da im gefüllten Zustand keine Außenluft, auch bei niedrigem Flüssigkeitsstand im Auffangbecken, mehr über das Filterrohr in den Absaugraum gelangen kann. Somit stellt sich sofort der Betriebsunterdruck ein und der Differenzdruck zwischen Atmosphäre und Unterdruck im Absaugraum wirkt auf den Feststoffpfropfen als Entwässerungsdruck.

Damit der Feststoffpfropfen noch besser die dadurch entstandene Kraft zum Austritt nach oben überwinden kann, sind Fördernuten innerhalb der Innenwand des Gleitrohres vorgesehen, die neben der Drainage einen zusätzlichen Widerstand in Umfangsrichtung der Wendel bilden und damit den Feststofftransport durch den unter einem Winkel von vorzugsweise 45° schräg gestellten Wendelsteg nach oben entgegen der Preßrichtung begünstigen. Grundsätzlich eigenen sich Winkel zwischen 20° bis 60° für die Wendelsteigung. Besonders bevorzugt sind allerdings Steigungswinkel für den Wendelgang zwischen 30° und 50°.

Damit läßt sich der Feststoffdurchsatz bei gleichen Wendelnuten erhöhen. Wenn die Suspension einen geringen Feststoffgehalt hat, kann der vermindert erforderliche Feststofftransport durch die Reduzierung der Drehzahl dem Bedarf angepaßt werden.

Durch die Anordnung einer Zuführleitung oder einer Rohrbank und den in diese hineinragenden Schneckenwellenstutzen sowie durch einen hin- und hergehenden Suspensionsfluß im Rohrraum der Zuführung infolge des niveaugeregelten Auffangbeckens, wird die Suspension homogen gehalten und es besteht die Möglichkeit, dass größere Feststoffteile in der Zuführleitung bzw. der Rohrbank zurückgehalten werden, so dass sich eine große Betriebsicherheit ergibt. Dieser Rohrraum kann durch die an den jeweiligen Enden angebrachten Absperrhähne gut inspiziert und gegebenenfalls gereinigt werden.

Ein Steigungswinkel der Schneckenwelle in einem Bereich von 30° - 50° Grad wirkt sich auf die Trennung und Förderung derartiger Suspensionen positiv aus.

Eine ungerade Anzahl von Wendeln zu nehmen, wirkt sich positiv auf die Montage der Schneckenwelle in das Filterrohr aus, da sich dabei die elastischen Elemente, die unter geringer Vorspannung in das Filterrohr eingefügt werden, nicht direkt gegenüberstehen.

Dadurch, dass der Bund der Schneckenwelle als Teilstück der Klauenkupplung ausgebildet ist und das Gegenstück der Klauenkupplung als Nabe am Motor befestigt ist, ergibt sich eine zuverlässige, einfache Kupplung, die vor allem den knappen Raum berücksichtigt

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: einen Längsschnitt durch eine erfindungsgemäße, senkrecht stehende Schneckenfilterpresse,
- Fig. 2a: eine Kantenausbildung der Wendeln im Filterbereich im Querschnitt (Schnitt A-A in Fig.1),
- Fig. 2b: eine alternative Kantenausbildung der Wendeln im Filterbereich (Schnitt A-A in Fig.1),
- Fig. 2c: eine weitere alternative Kantenausbildung der Wendeln im Filterbereich sofern die gesamte Schneckenwelle aus Polyurethan (sog. zelligem Vulkollan) besteht (Schnitt A-A in Fig.1),
- Fig. 2d: die Kantenausbildung der Wendeln und der Fördernuten im Gleit bereich (Schnitt B-B in Fig.1),
- Fig. 3: eine Anlage mit vier Schneckenfilterpressen, die hintereinander geschaltet sind, verbunden mit einer Rohrbank und
- Fig. 4 a-c: Schnittbilder durch die Schneckenwendel in unterschiedlichen axialen Lagen längs zur Schneckenwendel.

### Wege zur Ausführung der Erfindung, gewerbliche Verwendbarkeit

In einem senkrecht stehenden Gehäuse 1, mit einer Mittelachse 2 ist eine senkrecht stehende, d. h. parallel zur wirkenden Schwerkraft, antreibbare Schneckenwelle 10 koaxial angeordnet.

Das stehend angeordnete Gehäuse ist mehrteilig, wobei die einzelnen Teile über Flansche miteinander verbunden sind. Das untere Teil 24 des Gehäuses weist einen größeren Außendurchmesser auf als der daran angeflanschte obere Teil 28 des Gehäuses. Im unteren Gehäuseteil 24 ist das Filterrohr 3 koaxial zur Schneckenwelle 10 angeordnet. Zwischen Filterrohr 3 und Gehäuseinnenwand 6 befindet sich der Filtratraum 5.

Der untere Gehäuseteil 24, in dem das Filterrohr 3 zwischen den oberen und unteren Gehäuseflanschen 8, 9 gehalten wird und das Filtrat durch das Filterrohr abfließen kann, wird nachfolgend auch Filterbereich F genannt. Der obere Flansch 8 ist zur Halterung des Filterrohrs als Festlager ausgebildet, während der Gehäuseflansch 9 lediglich eine radiale Verschiebung des Filterrohres 3 verhindert.

Das Filterrohr 3 hat je nach Bedarf Öffnungen in der Größenordnung von 0,05 bis 1 mm, so dass die Flüssigkeit der Suspension durch die Öffnungen des Filterrohres 3 in den Filtratraum 5 zwischen Gehäuseinnenwand 6 und Filterrohraußenwand 7 abfließen kann.

Das Filterrohr 3 kann aus einem Lochblech bestehen, wobei die Durchbrechungen so ausgebildet sind, dass sie sich zur Gehäuseinnenwand 6 hin öffnen; das Filterrohr 3 kann aber auch ein zylindrischer Spaltfilter sein, dessen Öffnungen sich ebenfalls zur Gehäuseinnenwand 6 hin öffnen, also zur Gehäuseinnenwand sich konisch bzw. trichterförmig öffnen. Diese Lochausbildung hat den Vorteil, dass sich die Löcher selbst nahezu nicht verstopfen.

Der Filtratraum 5, der zwischen Gehäuseinnenwand 6 und Filterrohraußenwand 7 gebildet wird, wird nach oben von dem Flansch 8 begrenzt, der mit dem Gehäuse 1 verbunden ist und wie beschrieben ausgebildet ist.

Nach unten hin wird der Filtratraum 5 durch den Gehäuseflansch 9 begrenzt, in dem das Filterrohr 3 so gelagert ist, dass es sich nicht radial verschieben kann. Oberhalb des Gehäuseflansches 9 ist seitlich ein Filtratablaufstutzen 11 angebracht, durch den die Flüssigkeit der Suspension aus dem Filtratraum 5 abfließt bzw. abgepumpt wird.

Unter einer Suspension wird im Sinne dieser Beschreibung eine Aufschwemmung feinstverteilter fester Stoffe in einer Flüssigkeit verstanden, wie sie z.B. bei so genannter Gülle oder so genanntem Odel vorliegt.

Der Filtratablaufstutzen 11 kann durch einen Hahn 12, z.B. einen Kugelhahn, verschlossen werden.

Auf dem Flansch 8, der den Filtratraum 5 zum oben liegenden Antriebsmotor/Drehmotor 15 hin nach oben begrenzt, ist ein Gleitrohr 4 mit seinem unteren Rohrflansch 13 aufgesetzt und mit dem Flansch 8 z.B. mittels Schrauben verbunden.

Die Längsachse des aufgesetzten Gleitrohres 4 und die Längsachse der Schneckenwelle 10 sind deckungsgleich mit der Mittenachse 2. Ebenfalls ist der Innendurchmesser des Filterrohres 3 und der Innendurchmesser des Gleitrohres 4 gleich, d.h. der Filterbereich F und der Gleitbereich G haben gleichen Innendurchmesser.

Der obere Teil des Gehäuses 28 wird nach oben durch eine Platte 18 begrenzt. Unterhalb der Platte 18 befindet sich die Auswurföffnung 20 für die Feststoffteile der Suspension. Die Wendeln 14 der Schneckenwelle 10 enden mit Abstand zur Platte 18. Die Schneckenwelle 10 selbst, die am Ende einen Bund 30 aufweist, ist mit einer Nabe 19, die am unteren Ende die Kupplung 17 trägt, bis zur Antriebswelle des Antriebmotors 15, z.B. einem Elektromotor, geführt und mit diesem rotationsmäßig verbunden.

Die Schneckenwelle 10 weist vorzugsweise zwei oder mehrere Wendeln 14 auf. Besonders günstig ist eine ungerade Anzahl von Wendeln. Als besonders günstig hat sich bei Versuchen die Anzahl von fünf erwiesen. Die Anzahl: der Wendeln hängt natürlich vom Durchmesser der Schneckenwelle ab, im Versuch betrug der Durchmesser 75mm.

So hat die Schneckenwelle 10 beim Ausführungsbeispiel fünf Wendeln 14 bei einem Durchmesser von 75 mm mit einem Steigungswinkel von vorzugsweise 45°. Der Steigungswinkel α sollte vorzugsweise in einem Bereich von 30° bis 50° Grad liegen.

Die Schneckenwelle 10 wird über einen Antriebsmotor 15 angetrieben. Der Antriebsmotor 15 ist über eine Kupplung 17, z.B. einer Klauenkupplung, (nicht detailliert dargestellt) mit der Schneckenwelle in Umfangsrichtung verbunden.

Die Befestigung des Antriebsmotors 15 erfolgt auf der ebenfalls oben liegenden Lagerplatte 16 mittels Schraubenbolzen. Die Lagerplatte ist auf das senkrecht stehende Gehäuse 1, oberhalb der Lagerung der Schneckenwelle aufgesetzt.

Die Lagerung der Schneckenwelle, die sowohl die Axial- als auch Radialkräfte aufnimmt, ist in die Platte 18 des oberen Gehäuseteils integriert.

Die Lagerplatte 16, an deren Oberseite der Motor 15 befestigt ist, weist einen Abstand zur Platte 18 auf, die für die Verbindung bzw. Kupplung der Schneckenwelle mit dem Motor genutzt wird.

Am oberen Ende des oberen Gehäuseteils ist die Auswurföffnung 20 angeordnet. Mit der Auswurföffnung ist eine Rutsche 21 verbunden, auf der die zur Auswurföffnung geförderten Feststoffe in einen Auffangbehälter (nicht dargestellt) gleiten.

Die Zuführung der Suspension erfolgt über einen an den Gehäuseflansch 9 des unteren Gehäuses angeflanschten Gehäusestutzen 22.

Der Gehäusestutzen ist so ausgeformt, dass durch den unmittelbar mit dem unteren Gehäuse verbundene Teil die Schneckenwelle 10 bis etwa in die Mitte der rohrförmigen Zuführleitung 23 bzw. der Rohrbank 40 (siehe Fig. 3) reicht. Die Zuführleitung 23 ist im Bereich der Zuführung zusammen mit dem Gehäusestutzen als einstückiges Teil ausgebildet, an das die Zuführleitungsteile angeschweißt oder angeflanscht (nicht gezeichnet) sind.

Wird nun eine Schneckenfilterpresse eingesetzt, so dient die eine Seite des Gehäusestutzens zur Verbindung mit der Zuführleitung und die gegenüber liegende Seite zur Ankopplung der Weiterleitung in ein niveauhaltendes Auffangbecken 25, das mittels Niveauregler für die Einhaltung des maximalen und minimalen Niveaus im Gehäuse der Schneckenfilterpresse sorgt. Die Zuflußleitung zum Auffangbecken ist achsgleich in der Waagrechten mit dem Gehäusestutzen verbunden und weist einen Absperrhahn 29 oder eine Ablassöffnung für die Zuführleitung auf; gegenüberliegend ist meist der Zulauf einer Spülleitung 31 vorgesehen, siehe Fig. 3.

Sind mehrere Schneckenfilterpressen hintereinandergeschaltet, so werden die horizontalen Seiten der Gehäusestutzen durch Schweißen zu einer Rohrbank 40 verbunden und auf die vertikal stehenden Anschlüsse werden die Schneckenfilterpressen angeflanscht. (s. insbes. Fig.3) Natürlich wird auch hier eine Niveauregelung wie bei einer einzelnen Schneckenfilterpresse angeordnet, die entsprechend dimensioniert sein muss. Spülleitung 31 und ein Absperrhahn 29 werden ebenfalls vorgesehen. Die Zuführung der Suspension erfolgt über den Stutzen 35.

Infolge der Niveauregelung entsteht in der Zuführleitung bzw. der Rohrbank eine bewegte Strömung, die dafür sorgt, dass die Suspension stets gleich mäßig durchmischt ist. Größere Fremdkörper, die spezifisch schwerer sind, bleiben jedoch im unteren Teil der Zuführleitung bzw. der Rohrbank liegen.

Da die Schneckenwelle nur etwa bis in die Mitte der Zuführleitung bzw. der Rohrbank reicht, kann sich grobes Festgut am Boden der Zuführleitung ablagern und gelangt nicht in den Bereich der Schneckenwelle. Die Ablagerungen können von Zeit zu Zeit mittels der Spülleitung 31 über den Absperrhahn 29 entfernt werden.

Die Schneckenwelle 10 wird je nach Bedarf mit einem elektrisch, pneumatisch oder hydraulischen, drehzahlgeregelten Motor angetrieben. Die Umdrehungszahl liegt im Arbeitsbereich in der Größenordnung von 30 bis 100 U/min.

Auf der Antriebsseite kann zur Erreichung der Drehzahl ein Nachschaltgetriebe oder ein Stufengetriebe angeordnet sein, es kann auch ein Getriebemotor eingesetzt werden. Als Kupplung wird eine Klauenkupplung verwendet oder sofern erforderlich eine einstellbare Überlastkupplung.

Das Filterrohr 3 ist aus Metall und die Löcher sind z.B. mittels Laserverfahren in der gewünschten Form, im Allgemeinen mit größerem Lochquerschnitt zur Gehäuseinnenseite 6 hin, herausgearbeitet.

An Stelle eines Filterrohres kann auch ein zylindrischer Spaltfilter eingesetzt werden. Damit die nur einseitig oben in der Lagerplatte gelagerte Schneckenwelle bei einem Anlaufen an das Filterrohr keinen Schaden nimmt, wird die Schneckenwelle oder deren Wendel aus Kunststoff hergestellt.

Die senkrecht stehende Schneckenfilterpresse läßt sich in der Vertikalen grob in zwei Bereiche unterteilen, die im Wesentlichen zwei verschiedenen Aufgaben gerecht werden müssen.

Das untere Gehäuse mit dem zylindrischen Filterrohr kann man als Filterbereich F bezeichnen, den oberen Gehäusebereich bis in Höhe der Auswurföffnung kann man als Gleitbereich G bezeichnen. Der Filterbereich F ist etwa zweimal so hoch wie der Gleitbereich G.

Die drehende Schneckenwelle 10 fördert die Suspension aus der Zuführleitung 23 oder der Rohrbank 40 und die Suspension wandert entlang der Wendeln nach oben. Hierbei wird die Flüssigkeit von den Feststoffen getrennt, d.h. die Flüssigkeit fließt durch die Öffnungen des Filterrohres 3 in den Filtratraum ab. Hierbei wird durch die Drehung der Schneckenwelle auch Feststoff gegen die Innenwand des Filterrohres geschleudert.

Die Kanten der Wendeln müssen in diesem Bereich so ausgebildet sein, dass sie die Innenwand des Filterrohrs freihalten. Dies geschieht dadurch, dass die Kanten die Feststoffe abschaben, so dass die Feststoffe weiter zur Auswurföffnung befördert werden und die Feststoffe durch den Entzug von Flüssigkeit einen Feststoffkuchen mit einer vorgesehenen Konsistenz bilden.

Mit zunehmender Entfeuchtung neigt der Feststoffkuchen dazu, sich auf der Wendel festzusetzen. Im Gleitbereich, in dem sich bereits ein Feststoffkuchen gebildet hat, steht im Vordergrund die Gleitfähigkeit des Feststofflcuchens und eine weitere starke Entfeuchtung kann sogar dazu führen, dass der Feststofflcuchen verklumpt.

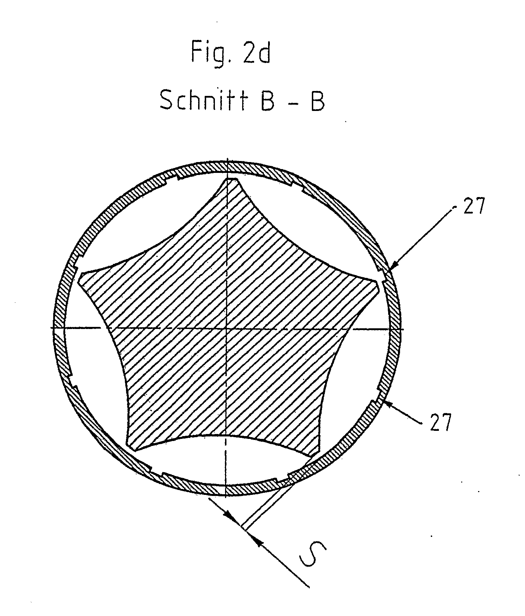

Deshalb hat im Gleitbereich die Schneckenwelle allein die Aufgabe der Förderung und damit sie dieser Aufgabe nachkommen kann, ist zwischen der Innenwand des Gleitrohres und der Außenkante der Wendeln ein Spiel 5 von 0,1 bis 0,3mm vorgesehen, so dass die Wendeln der Schneckenwelle im Gleitbereich nicht am Innenraum des Gleitrohres anliegen (s. Fig. 2d).

Im Filterbereich hingegen sollen die Wendelkanten die Feststoffe von der Innenseite des Filterrohres 3 entfernen, damit der Abfluß der Flüssigkeit nicht behindert wird.

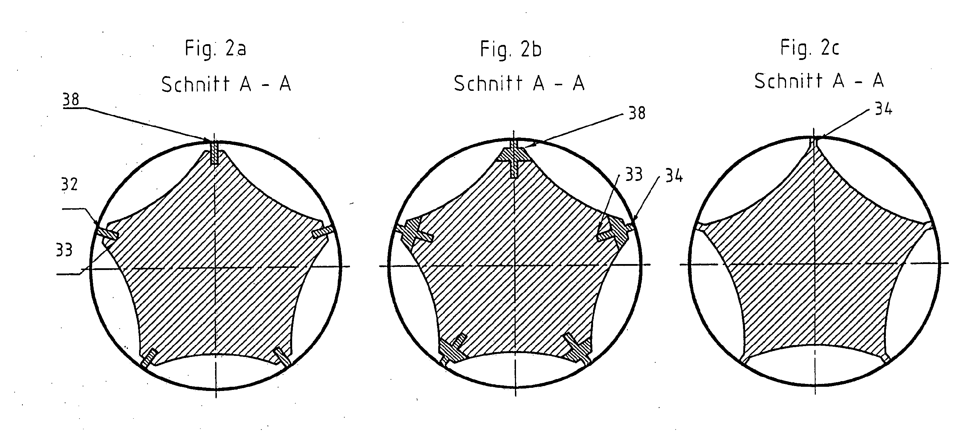

Die Fig. 2a-c zeigen drei verschiedene Möglichkeiten für die Ausbildung der elastischen Elemente 38 an den Wendelkanten. Fig.2a zeigt das Einsetzen eines Streifens 32 in eine Nut 33. Der Streifen besteht aus einem abriebsfesten und elastischen Material wie z.B. Polyurethan (sog. zelliges Vulkollan).

Eine andere Möglichkeit der Kantenausbildung zeigt Fig. 2b. Auch hier wurden die Kanten der Wendeln abgedreht und auf die Kantenfläche wird ein Profil aufgesetzt, entweder in eine Nut oder mit der Planfläche verklebt, wobei das Profil an der zum Filterrohr zeigenden Kante eine Anfügung 34 aufweist, die z.B. etwa 2 mm breit und 3 mm hoch ist. Das Profil besteht wie der Streifen aus dem elastischen, abriebfesten Polyurethan (sog. zelliges Vulkollan).

Die Fig. 2c zeigt eine Anfügung 34 an die Wendeln wie in Fig. 2b. Bei der Fig. 2c dargestellten Schneckenwelle ist die gesamte Schneckenwelle aus Polyurethan (sog. Vulkollan) gefertigt oder wenigstens der Teil der Schneckenwelle im Filterbereich ist aus Polyurethan gefertigt; natürlich ist auch im Fall der Fertigung der gesamten Schneckenwelle aus Polyurethan (sog. Vulkollan) im Gleitbereich ein Spiel von 0,1-0,3 mm zwischen Wendelkante und Innenfläche des Gleitrohrs vorzusehen.

Die Kantenausbildung der Wendeln im Filterbereich bei den beschriebenen Alternativen ist in den Abmessungen stets gleich; so liegt die Breite der Kanten zwischen 1-3 mm; die Höhe zwischen 2-5 mm.

Bei dem genannten Werkstoff handelt es sich um ein zelliges Vulkollan, ein mit Wasser geschäumtes Polyurethan, das höchste dynamische Eigenschaften besitzt. Zelliges Vulkollan läßt ca. 80% Stauchung bei geringer Querdehnung und minimaler bleibender Verformung zu (siehe Formenliste Ausgabe 1992 der Firma Paul Pleiger, Maschinenfabrik GmbH + Co.KG, Im Hammertal 51 58456 Witten 3

Auf Grund dieser physikalischen Eigenschaften wird die Schneckenwelle 10 im Filterbereich unter leichter Vorspannung in das Filterrohr 3 eingefügt. Für den Einbau hat sich deshalb als besonders vorteilhaft erwiesen, eine ungerade Anzahl von Wandeln z.B. 3, 5, 7 zu verwenden.

Wie bereits beschrieben, wird durch die Wendeln 14 der Feststoff nach oben zur Auswurföffnung 20 gefördert. Es bildet sich dabei ein Feststoffkuchen aus, der mit zunehmender Wanderung nach oben immer fester wird.

Um die Ausbildung des Feststoffkuchens zu beschleunigen, wird über den Anschluß 26 der Unterdruck, der durch das Abpumpen des Filtrats entsteht, über ein Ventil 36 geregelt. Bei einem am Ventil 36 eingestellten, gleich bleibendem Unterdruck von ca. 0,5 bar, der auf die Suspension einwirkt, wird nicht nur der Suspension stärker Flüssigkeit entzogen, sondern auch dem Feststoffkuchen im Gleitbereich wird noch Flüssigkeit entzogen.

Ein konstanter Unterdruck ist nach der Anlaufphase erst erreicht, wenn sich in dem Gleitrohr 4 ein Feststoffkuchen gebildet hat, so dass aus dem Bereich der Auswurföffnung 20 der Luftzufluss vermindert, ja nahezu unterbunden wird.

Der Feststoffkuchen selbst neigt infolge des Flüssigkeitsentzugs häufig zur Klumpenbildung. Dies kann zur Verstopfung der einzelnen Wendeln führen.

Um die Klumpenbildung einerseits und eine zu feste Bindung des Feststoffkuchens an der Wendel, insbesondere dem Wendelboden, zu verhindern, sind im Gleitrohr Fördernuten 27 vorgesehen, siehe Fig. 2d.

Beim Ausführungsbeispiel sind acht Fördernuten 27 in Längsrichtung vorgesehen. Diese Fördernuten wirken dem Verstopfen der Wendeln entgegen und erhöhen den Feststoffaustrag. An Stelle von senkrecht stehenden Fördernuten können diese auch spiralförmig bzw. helikal, ausgebildet sein.

Fig. 3 zeigt eine Filteranordnung mit vier hintereinander geschalteten Schneckenfilterpressen.

Über eine Zuführleitung 23, einer sog. Rohrbank 40, wird die Suspension den vier Schneckenfilterpressen zugeführt. Können die vier Schneckenfilterpressen die durch eine Pumpe zugeführte Menge nicht abführen, so wird der Überschuß in das Auffangbecken 25 gepumpt. Dieses ist mit einer Niveauregelung ausgestattet, so dass ein Höchststand und ein Niedrigststand definiert sind.

Durch diese Niveauregelung ist die Suspension in der Rohrbank stets in Bewegung, einmal strömt sie zum Auffangbecken, zum anderen strömt sie vom Auffangbecken zur Zuführleitung zurück; die Suspension wird dadurch stets durchmischt.

Der Niveauhöchststand reicht etwa bis in die untere Hälfte des Gleitrohres 4, der Niedrigststand liegt im unteren Bereich des Filterrohres. Dadurch, dass die Schneckenwelle 10 nur aus der oberen Hälfte der Zuführleitung 23 Suspension aufnimmt, ist sicher gestellt, dass keine größeren Festkörper in die Wendeln gelangen, die zu Beschädigungen führen könnten.

Sollten sich Festkörper in der Zuführleitung oder der Rohrbank mit der Zeit ansammeln, so können diese über den Absperrhahn 29, der mit dem Zulauf verbunden ist, entfernt werden.

Die Suspension wird entlang der Wendeln nach oben geführt, wobei je nach Feststoffgehalt die Drehzahl der Schneckenwelle erhöht oder reduziert wird und/oder der Unterdruck erhöht wird. Die Drehzahl und der Unterdruck werden stets so verändert, dass die gewünschte Konsistenz im Feststoffkuchen erzielt wird.

Auf dem Weg nach oben erfolgt die Trennung von Feststoff und Flüssigkeit im vorgesehenen Umfang. Wenn der Feststoff an der Auswurföffnung 20 angelangt ist, wird er ausgeworfen, die Flüssigkeit wird über den Filtratablaufstutzen 11 abgepumpt.

Die Wendeln der Schneckenwelle 10 weisen vorzugsweise eine Steigung zwischen 30° und 50° auf. Eine Steigung von 45° hat sich als besonders gut erwiesen.

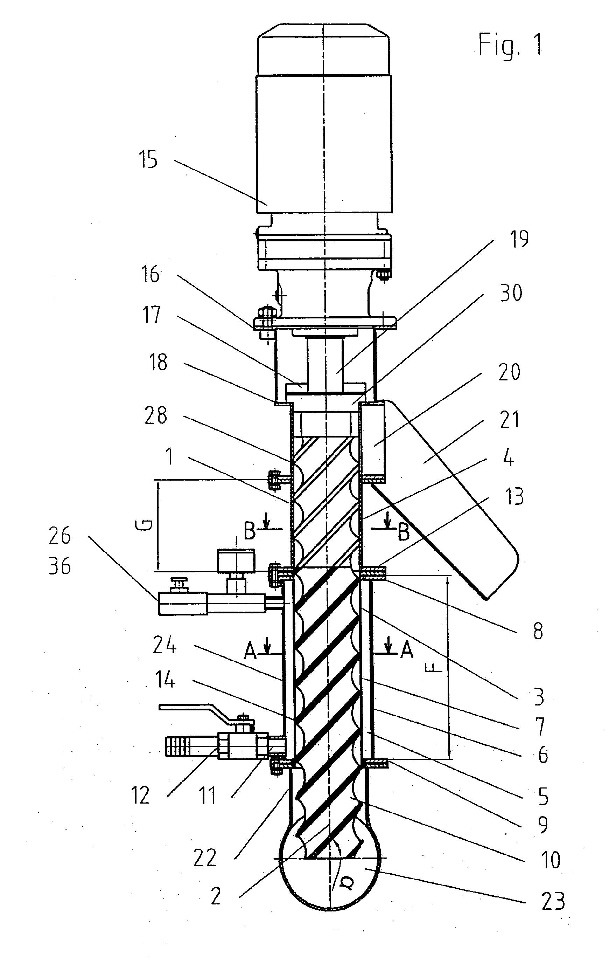

Wird bei einer Schneckenfilterpresse wie sie in Fig.1 dargestellt ist, eine Suspension mit ca. 3% Feststoffanteil über den Gehäusestutzen 22 zugeführt, so wird die Suspension entlang der Wendelgänge nach oben geleitet. Die Flüssigkeit der Suspension wird durch das Filterrohr 3 gefiltert und gelangt in den Filtratraum 5. Von dort fließt das Filtrat ab oder es wird abgepumpt.

Mit Beginn der Zuführung der Suspension wird die Schneckenwelle 10 mit ca. 50 bis 60 U/min. durch den Antriebsmotor 15 in Rotation versetzt. Wobei es selbstverständlich ist, dass die Wendeldrehung und die Drehrichtung des Motors, sofern kein Wendegetriebe dazwischen geschaltet ist, gleichläufig sind.

Die Nuten zwischen den Wendeln sind so ausgebildet, dass die Wendeln der Schneckenwelle die Feststoffe zunächst immer wieder gegen das Filterrohr und anschließend an die Rohrinnenwand des Rohres 4 drücken und versuchen, den Feststoff zum Auswurf hin zu fördern. Es ist deshalb wichtig, dass die Ausbildung der Nuträume zwischen den Wendeln auf den Anfall von Feststoffen insoweit angepasst ist und dass die Verweilzeit des Feststoffes in den Wendeln der Schneckenwelle den Bedürfnissen angepasst werden kann, weshalb unter anderem eine Drehzahl in einem niedrigen Bereich von ca. 50 U/min. gewählt wurde, oder der Unterdruck verstärkt wird. Auch bei der Auswahl der Schneckenwelle selbst muss auf die Art der Suspension Rücksicht genommen werden.

Bei einer Versuchsanlage hatte die Schneckenwelle fünf Wendeln bei einem Gesamtdurchmesser der Schneckenwelle von 75 mm. Das Filterrohr hatte eine Lochgröße von 0,1 mm. Die Höhe des Filterbereichs F, vom Gehäuseflansch 9 bis Flansch 8 betrug 200 mm. Die Höhe des Gleitbereichs G betrug ca. 100 mm. Die Schneckenwelle wurde mit ca. 50 U/min. gedreht. Die ausgeworfenen Festkörperpellets hatten einen Feuchtanteil von ca. 75%. Der Unterdruck im Filtratraum betrug ca. -0,4 bar.

Der Durchmesser des achsgleich angeordneten zylindrischen Gleitrohres 4 und des Filterrohres 3 betrug 75 mm. Die Fördernuttiefe betrug ca. 1 mm, sie hatte eine Breite von 3 mm und es waren am Umfang 8 Fördernuten angeordnet.

Derartige Schneckenfilterpressen werden eingesetzt zur Trennung von Feststoffen und Flüssigkeit bei Suspensionen. Derartige Suspensionen, oft auch Feststoffsuspensionen genannt, kommen beispielsweise bei der Fermenterschlammaufbereitung aus Biogasanlagen, bei der Gülleaufbereitung, bei der Klärschlammentsorgung, bei Pflanzenölpreßanlagen, bei der Fruchtsafthersstellung, bei der Wertstoffrückgewinnung bei Prozeßflüssigkeiten, bei der Reinigung von Abwasser und anderem vor.

Um die Entfeuchtung zu optimieren, kann es erforderlich sein, dass der Entfeuchtungsgrad der Feststoffpellets laufend oder in gewissen Abständen gemessen wird und z.B. die Drehzahl der Schneckenwelle oder der Unterdruck im Filtratraum geregelt wird. Der Unterdruck kann über eine Drehzahländerung der Absaugpumpe oder über ein Lufteinlaßventil verändert werden. Dies kann händisch oder über automatische Regelungen erfolgen.

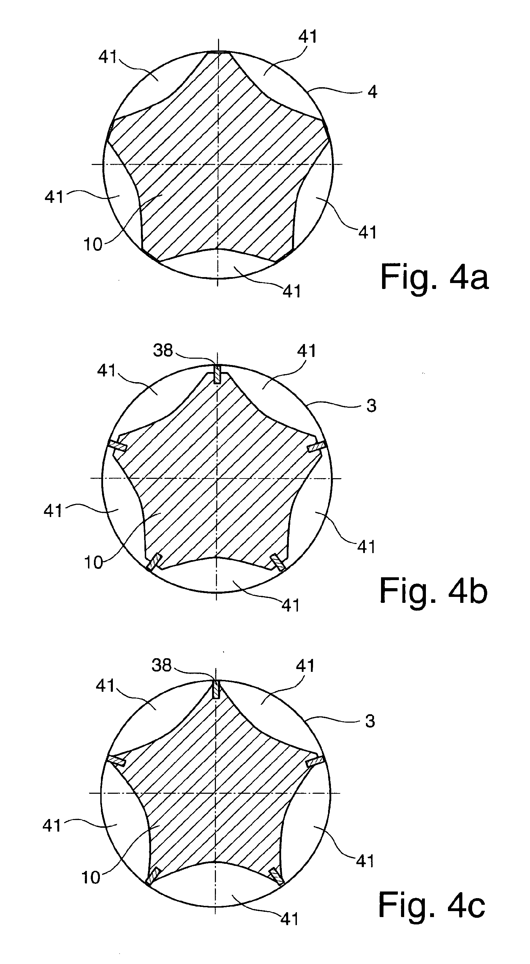

Eine weitere Massnahme zur Verbesserung des Entfeuchtungsgrades ist anhand eines in den Figuren 4 a, b, und c illustrierten Ausführungsbeispieles zu entnehmen. Die Figuren 4 a bis c zeigen jeweils Radial-Schnittbilder durch die Schneckenwelle 10 in jeweils unterschiedlichen axialen Lagen relativ zur Schneckenwelle 10. Figur 4a zeigt einen Schnitt durch die Schneckenwelle 10 im Gleitbereich, in dem die Schneckenwelle 10 von dem Gleitrohr 4 umschlossen ist. Das Gleitrohr 4 schließt mit der Schneckenwelle 10 längs der die Schneckenwelle 10 helikal umgebenden Wendelgänge jeweils einen Förderraum 41 ein. In entsprechender Weise schließt auch das Filterrohr 3 mit der Schneckenwelle 10 im Filterbereich, siehe die Figuren 4b und 4c, einen jeweils einen Förderraum 41 ein. Es sei an dieser Stelle angemerkt, dass der in Figur 4b gezeigte Radialschnitt im oberen Bereich längs des Filterbereiches liegt und Fig. 4c das Schneckenwellenende zeigt, das vom Filterrohr 3 in axialer Blickrichtung umgeben ist. Wesentlich ist, dass der Querschnitt des jeweiligen Förderraumes 41 vom unteren Schneckenwellenende in Richtung des oberen Schneckenwellenendes abnimmt, wodurch der Verdichtungseffekt für das mittels der Schneckenwelle nach oben zu befördernde Gut nach oben hin zunimmt. Eine derartig konzipierte Schneckenwelle ist vor allem für die Trockung bzw. Entwässerung von Suspensionen geeignet, die leicht komprimierbare Feststoffanteile enthält.

### Bezugszeichenliste

- 1: Gehäuse
- 2: Mittelachse
- 3: Filterrohr
- 4: Gleitrohr
- 5: Filtratraum
- 6: Gehäuseinnenwand
- 7: Filterrohraußenwand
- 8: Flansch
- 9: Gehäuseflansch
- 10: Schneckenwelle
- 11: Filtratablaufstutzen
- 12: Hahn
- 13: Rohrflansch
- 14: Wendel / Wendelgang
- 15: Antriebsmotor / Drehantrieb
- 16: Lagerplatte
- 17: Kupplung
- 18: Platte
- 19: Nabe
- 20: Auswurföffnung
- 21: Rutsche
- 22: Gehäusestutzen
- 23: Zuführleitung
- 24: Unterer Teil des Gehäuses
- 25: Auffangbecken
- 26: Anschluß
- 27: Fördernuten
- 28: Oberes Teil des Gehäuses
- 29: Absperrhahn
- 30: Bund
- 31: Spülleitung
- 32: Streifen
- 33: Nut
- 34: Anfügung
- 35: Stutzen
- 36: Ventil
- 37: N.N
- 38: elastisches Element
- 39: N.N
- 40: Rohrbank
- 41: Förderraum
- F: Filterbereich
- G: Gleitbereich
- S: Spiel
- α: Steigungswinkel

## Patentansprüche

1. Schneckenfilterpresse, mit einer über wenigstens einen Wendelgang (14) und zwei Schneckenwellenenden verfügenden Schneckenwelle (10), deren Wellenachse parallel zum Schwerkraftsvektor orientiert ist, die über deren oberes Schneckenwellenende einseitig gelagert und mit einem Drehantrieb (15) verbunden ist, und die wenigstens in ihrem unteren Teilbereich in einem so genannten Filterbereich (F) koaxial von einem mit Öffnungen versehenen, zylindrischen Filterrohr (3) umgeben ist, an dem radial ein Filtratraum (5) angrenzt, in dem Unterdruck anliegt,
**dadurch gekennzeichnet, dass** koaxial an das Filterrohr (3) ein sich mit gleichem Innendurchmesser wie das Filterrohr (3), die Schneckenwelle (10) in Richtung des oberen Schneckenwellenendes radial fluiddicht umgebendes Gleitrohr (4) anschließt, dass sich der wenigstens eine Wendelgang (14) im Bereich des Filterrohres (3) und des Gleitrohres (4) erstreckt,
dass im Bereich des oberen Schneckenwellenendes das Gleitrohr (4) eine seitliche Auswurföffnung (20) vorsieht,
und
dass der wenigstens eine Wendelgang (14) der Schneckenwelle (10) radial zur Schneckenwelle (10) in einer die Schneckenwelle (10) helikal umlaufenden Kante mündet, die im Bereich des Filterrohres (3) mittel- oder unmittelbar inwanding am Filterrohr (3) angrenzt.

2. Schneckenfilterpresse nach Anspruch 1,
**dadurch gekennzeichnet, dass** längs der Kante des Wendelgangs (14) im Filterbereich (F) ein elastisches Element (38), in Art einer Abstreiflippe vorgesehen ist, das mit Vorspannung inwandig am Filterohr (3) angrenzt.

3. Schneckenfilterpresse nach Anspruch 2,
**dadurch gekennzeichnet, dass** das elastische Element (38) aus einem elastischen, abriebfesten Material gefertigt ist, und
dass das als Abstreiflippe ausgebildete elastische Element (38) eine Breite von 1 - 3 mm und eine gegenüber der Kante des Wendelganges (14) erhabene Höhe von 2 - 5 mm aufweist.

4. Schneckenfilterpresse nach Anspruch 2 oder 3,
**dadurch gekennzeichnet, dass** das elastische Element (38) aus Polyurethan gefertigt ist.

5. Schneckenfilterpresse nach einem der Ansprüche 2 bis 4,
**dadurch gekennzeichnet, dass** das elastische Element (38) als vorgefertigtes Einzelteil in eine längs der Kante verlaufenden Nut (33) eingeklebt ist.

6. Schneckenfilterpresse nach einem der Ansprüche 1 bis 5,
**dadurch gekennzeichnet, dass** zwischen dem wenigstens einen Wendelgang (14) der Schneckenwelle (10) und dem Gleitrohr (4) ein radiales Spiel (S) vorgesehen ist.

7. Schneckenfilterpresse nach Anspruch 6,
**dadurch gekennzeichnet, dass** das radiale Spiel (S) zwischen dem Wendelgang (14) der Schneckenwelle (10) und dem Gleitrohr (4) zwischen 0,1 bis 0,3 mm beträgt.

8. Schneckenfilterpresse nach einem der Ansprüche 1 bis 7,
**dadurch gekennzeichnet, dass** sowohl die Drehzahl des Drehantriebes (15) wie auch der im Filtratraum (5) anlegbare Unterdruck regelbar sind.

9. Schneckenfilterpresse nach einem der Ansprüche 1 bis 8,
**dadurch gekennzeichnet, dass** in der Innenwand des Gleitrohres (4) axial verlaufende oder spiralförmige Fördernuten (27) angeordnet sind.

10. Schneckenfilterpresse nach einem der Ansprüche 1 bis 9,
**dadurch gekennzeichnet, dass** die Schneckenwelle (10) eine ungerade Zahl von Wendelgängen (14) aufweist.

11. Schneckenfilterpresse nach einem der Ansprüche 1 bis 10,
**dadurch gekennzeichnet, dass** der wenigstens eine Wendelgang (14) einen Steigungswinkel (α) im Bereich von 30° - 50° Grad aufweist, wobei α von der Wellenachse und dem Wendelgang (14) eingeschlossen ist.

12. Schneckenfilterpresse nach einem der Ansprüche 1 bis 11,
**dadurch gekennzeichnet, dass** das Gleitrohr (4) eine Rohrlänge aufweist, die halb so lang ist wie die Rohrlänge des Filterrohrs (3).

13. Schneckenfilterpresse nach einem der Ansprüche 1 bis 12,
**dadurch gekennzeichnet, dass** das untere Schneckenwellenende in eine Zuführleitung (23) frei mündet, und dass
das Filterrohr (3) fluiddicht an die Zuführleitung (23) angebracht ist.

14. Schneckenfilterpresse nach einem der Ansprüche 1 bis 13,
**dadurch gekennzeichnet, dass** der wenigstens eine Wendelgang der Schneckenwelle mit dem Filter- und dem Gleitrohr einen die Schneckenwelle helikal umgebenden Förderraum einschließt, und
dass der Förderraum im Bereich des Filterrohrs einen größeren Förderraumquerschnitt aufweist als im Gleitbereich.

15. Schneckenfilterpresse nach Anspruch 14,
**dadurch gekennzeichnet, dass** sich der Förderraumquerschnitt mit zunehmenden Abstand vom unteren Schneckenwellenende kontinuierlich verjüngt.

## Claims

1. A worm filter press, having a worm shaft (10) comprising at least one helical thread (14) and two worm shaft ends, the shaft axis of which is orientated parallel to the gravity vector, which is mounted on one side via the upper worm shaft end thereof and connected to a rotary drive (15), and which is coaxially surrounded at least in the lower part region thereof in a so-called filter region (F) by a cylindrical filter tube (3), which is provided with openings and which is radially adjoined by a filtrate chamber (5), in which underpressure is present,
**characterised in that** a sliding tube (4) with the same internal diameter as the filter tube (3) coaxially adjoins the filter tube (3) and radially surrounds the worm shaft (10) in a fluid-tight manner in the direction of the upper worm shaft end, **in that** the at least one helical thread (14) extends in the region of the filter tube (3) and the sliding tube (4),
**in that** the sliding tube (4) provides a lateral discharge opening (20) in the region of the upper worm shaft end,
and
**in that** the at least one helical thread (14) of the worm shaft (10) opens radially to the worm shaft (10) in an edge helically surrounding the worm shaft (10), which edge adjoins the filter tube (3) indirectly or directly at the inner wall in the region of the filter tube (3).

2. The worm filter press according to claim 1, **characterised in that** an elastic element (38) is provided along the edge of the helical thread (14) in the filter region (F) in the manner of a scraper lip, which adjoins the filter tube (3) at the inner wall with prestress.

3. The worm filter press according to claim 2,
**characterised in that** the elastic element (38) is manufactured from an elastic, abrasion-resistant material, and
**in that** the elastic element (38) constructed as scraper lip has a width of 1 - 3 mm and a raised height compared to the edge of the helical thread (14) of 2 - 5 mm.

4. The worm filter press according to claim 2 or 3,
**characterised in that** the elastic element (38) is manufactured from polyurethane.

5. The worm filter press according to one of claims 2 to 4,
**characterised in that** the elastic element (38) is glued as a pre-manufactured single part into a groove (33) running along the edge.

6. The worm filter press according to one of claims 1 to 5,
**characterised in that** a radial play (S) is provided between the at least one helical thread (14) of the worm shaft (10) and the sliding tube (4).

7. The worm filter press according to claim 6, **characterised in that** the radial play (S) between the helical thread (14) of the worm shaft (10) and the sliding tube (4) is between 0.1 and 0.3 mm.

8. The worm filter press according to one of claims 1 to 7,
**characterised in that** both the rotational speed of the rotary drive (15) and the underpressure that can be applied in the filtrate chamber (5) can be regulated.

9. The worm filter press according to one of claims 1 to 8,
**characterised in that** axially running or spiral-shaped guide grooves (27) are arranged in the inner wall of the sliding tube (4).

10. The worm filter press according to one of claims 1 to 9,
**characterised in that** the worm shaft (10) has an odd number of helical threads (14).

11. The worm filter press according to one of claims 1 to 10,
**characterised in that** the at least one helical thread (14) has a pitch angle (α) in the range of 30° - 50°, wherein α is enclosed by the shaft axis and the helical thread (14).

12. The worm filter press according to one of claims 1 to 11,
**characterised in that** the sliding tube (4) has a tube length, which is half as long as the tube length of the filter tube (3).

13. The worm filter press according to one of claims 1 to 12,
**characterised in that** the lower worm shaft end freely opens into a supply line (23), and **in that**
the filter tube (3) is attached to the supply line (23) in a fluid-tight manner.

14. The worm filter press according to one of claims 1 to 13,
**characterised in that** the at least one helical thread of the worm shaft with the filter tube and the sliding tube encloses a conveying chamber helically surrounding the worm shaft, and
**in that** the conveying chamber has a larger conveying chamber cross section in the region of the filter tube than in the sliding tube.

15. The worm filter press according to claim 14,
**characterised in that** the conveying chamber cross section tapers continuously with increasing distance from the lower worm shaft end.

## Revendications

1. Filtre-presse à vis sans fin, avec un arbre de vis sans fin (10) disposant d'au moins une cannelure hélicoïdale (14) et de deux extrémités d'arbre de vis sans fin, dont l'axe d'arbre est orienté parallèlement au vecteur force de gravité, lequel est monté d'un côté via son extrémité d'arbre de vis sans fin et est relié à un entraînement rotatif (15) et lequel est entouré, au moins dans sa partie inférieure, dans une dénommée zone de filtrage (F), de manière coaxiale, par un tube de filtrage (3) cylindrique muni d'ouvertures auquel un espace à filtrat (5) est radialement adjacent dans lequel une dépression est appliquée,
**caractérisé en ce qu'**un tube de glissement (4), avec un même diamètre intérieur que le tube de filtrage (3), entourant radialement de manière étanche aux fluides l'arbre de vis sans fin (10) en direction de l'extrémité supérieure d'arbre de vis sans fin, est en jonction coaxiale avec le tube de filtrage (3), **en ce que** l'au moins une cannelure hélicoïdale (14) s'étend dans la zone du tube de filtrage (3) et du tube de glissement (4),
**en ce que**, dans la zone de l'extrémité supérieure de l'arbre de vis sans fin, le tube de glissement (4) prévoit une ouverture d'éjection latérale (20),
et
**en ce que** l'au moins une cannelure hélicoïdale (14) de l'arbre de vis sans fin (10) débouche radialement par rapport à l'arbre de vis sans fin (10) dans une arête faisant le tour de l'arbre de vis sans fin (10) hélicoïdalement, laquelle est indirectement ou directement adjacente, côté paroi intérieure, au tube de filtrage (3) dans la zone du tube de filtrage (3).

2. Filtre-presse à vis sans fin selon la revendication 1,
**caractérisée en ce que**, le long de l'arête de la cannelure hélicoïdale (14), dans la zone de filtrage (F), un élément élastique (38) de type lèvre de raclage est prévu, lequel est adjacent sous précontrainte au tube de filtrage (3) côté paroi intérieure.

3. Filtre-presse à vis sans fin selon la revendication 2,
**caractérisé en ce que** l'élément élastique (38) est fabriqué en un matériau élastique résistant à l'abrasion et
**en ce que** l'élément élastique (38) réalisé en tant que lèvre de raclage présente une largeur de 1 - 3 mm et une hauteur de 2 - 5 mm en relief par rapport à l'arête de la cannelure hélicoïdale (14).

4. Filtre-presse à vis sans fin selon la revendication 2 ou 3,
**caractérisé en ce que** l'élément élastique (38) est fabriqué en polyuréthane.

5. Filtre-presse à vis sans fin selon l'une des revendications 2 à 4,
**caractérisé en ce que** l'élément élastique (38) est collé, en tant que pièce individuelle préfabriquée, dans une rainure (33) s'étendant le long de l'arête.

6. Filtre-presse à vis sans fin selon l'une des revendications 1 à 5,
**caractérisé en ce que** l'on prévoit un jeu radial (S) entre l'au moins une cannelure hélicoïdale (14) de l'arbre de vis sans fin (10) et le tube de glissement (4).

7. Filtre-presse à vis sans fin selon la revendication 6,
**caractérisé en ce que** le jeu radial (S) entre la cannelure hélicoïdale (14) de l'arbre de vis sans fin (10) et le tube de glissement (4) est compris entre 0,1 et 0,3 mm.

8. Filtre-presse à vis sans fin selon l'une des revendications 1 à 7,
**caractérisé en ce que** le nombre de tours de l'entraînement rotatif (15) tout comme également la dépression pouvant être appliquée dans l'espace à filtrat (5) sont réglables.

9. Filtre-presse à vis sans fin selon l'une des revendications 1 à 8,
**caractérisé en ce que**, dans la paroi intérieure du tube de glissement (4), des rainures d'acheminement (27) s'étendant axialement ou en forme de spirale sont disposées.

10. Filtre-presse à vis sans fin selon l'une des revendications 1 à 9,
**caractérisé en ce que** l'arbre de vis sans fin (10) présente un nombre impair de cannelures hélicoïdales (14).

11. Filtre-presse à vis sans fin selon l'une des revendications 1 à 10,
**caractérisé en ce que** l'au moins une cannelure hélicoïdale (14) présente un angle d'inclinaison (α) dans la plage de 30° - 50°, où α est formé par l'axe d'arbre et la cannelure hélicoïdale (14).

12. Filtre-presse à vis sans fin selon l'une des revendications 1 à 11,
**caractérisé en ce que** le tube de glissement (4) présente une longueur de tube qui est de la moitié de la longueur de la longueur de tube du tube de filtrage (3).

13. Filtre-presse à vis sans fin selon l'une des revendications 1 à 12,
**caractérisé en ce que** l'extrémité inférieure de l'arbre de vis sans fin débouche librement dans une conduite d'amenée (23), et **en ce que**
le tube de filtrage (3) est placé de manière étanche aux fluides sur la conduite d'amenée (23).

14. Filtre-presse à vis sans fin selon l'une des revendications 1 à 13,
**caractérisé en ce que** l'au moins une cannelure hélicoïdale de l'arbre de vis sans fin enferme, avec le tube de filtrage et le tube de glissement, un espace d'acheminement entourant hélicoïdalement l'arbre de vis sans fin, et
**en ce que** l'espace d'acheminement présente une plus grande section transversale d'espace d'acheminement dans la zone du tube de filtrage que dans la zone de glissement.

15. Filtre-presse à vis sans fin selon la revendication 14,
**caractérisé en ce que** la section transversale de l'espace d'acheminement s'amenuise de manière continue avec l'augmentation de la distance par rapport à l'extrémité inférieure de l'arbre de vis sans fin.
